# EUROPÄISCHE PATENTSCHRIFT

(11) **EP 1 854 119 B1**
(45) Veröffentlichungstag und Bekanntmachung des Hinweises auf die Patenterteilung: **02.12.2009**
(21) Anmeldenummer: 06705926.1
(22) Anmeldetag: 07.02.2006
(51) Int. Cl.: H01J 9/38, H01J 9/395, H01J 61/34

(54) **VERFAHREN ZUR HERSTELLUNG EINER ENTLADUNGSRÖHRENANORDNUNG UND EINE DERARTIGE ENTLADUNGSRÖHRENANORDNUNG**
METHOD FOR PRODUCING A DISCHARGE TUBE ARRANGEMENT, AND ONE SUCH DISCHARGE TUBE ARRANGEMENT
PROCEDE POUR PRODUIRE UN DISPOSITIF DE TUBE A DECHARGE ET DISPOSITIF DE TUBE A DECHARGE AINSI PRODUIT

(30) Priorität: 28.02.2005 DE 102005009609; 16.03.2005 DE 102005012488
(43) Veröffentlichungstag der Anmeldung: 14.11.2007
(73) Patentinhaber: Osram Gesellschaft mit beschränkter Haftung, 81543 München (DE)
(72) Erfinder: BEDYNEK, Florian, 14089 Berlin (DE); BRENNER, Franz, 86356 Neusäss (DE); GRÄF, Jürgen, 86163 Augsburg (DE); SCHMIDT-LEHMANN, Thomas, 14532 Kleinmachnow (DE)
(74) Vertreter: Raiser, Franz
(86) Internationale Anmeldenummer: PCT/DE2006/000200
(87) Internationale Veröffentlichungsnummer: WO 2006/089509

(56) Entgegenhaltungen:
- DE-A1- 10 157 868
- US-A1- 2004 253 897
- PATENT ABSTRACTS OF JAPAN Bd. 013, Nr. 364 (E-805), 14. August 1989 (1989-08-14) & JP 01 120728 A (MITSUBISHI ELECTRIC CORP), 12. Mai 1989 (1989-05-12)

## Beschreibung

### Technisches Gebiet

Die Erfindung betrifft ein Verfahren zur Herstellung einer Entladungsröhrenanordnung gemäß dem Oberbegriff des Patentanspruchs 1.

### Stand der Technik

Die Erfindung ist prinzipiell bei allen Lampen anwendbar, bei denen eine Entladungsröhre in einem Außenkolben oder dergleichen aufgenommen ist. Das Hauptanwendungsgebiet dürfte jedoch bei Entladungslampen liegen, die von einem Außenkolben umgeben sind, der über zwei Außenkolbenenden mit der Entladungsröhre dichtend verbunden ist. Eine derartige Entladungsröhrenanordnung und deren Herstellungsverfahren sind beispielsweise aus der DE 101 57 868 A1 bekannt.

Die Herstellung dieser bekannten Entladungsröhrenanordnung erfolgt dadurch, dass zunächst eine Entladungsröhre in einen Außenkolben eingeführt wird. Dieser hat zwei Außenkolbenenden und wird nach einer Erwärmung entlang einem ersten Außenkolbenende dichtend mit einem Flanschbereich der Entladungsröhre verschweißt. Anschließend erfolgt über das noch offene zweite Außenkolbenende ein Gasaustausch in dem von Entladungsröhre und Außenkolben begrenzten etwa ringförmigen Zwischenraum. Hierzu wird durch das zweite Außenkolbenende mittels einem Pumpen/Spülen-Prozess das vorhandene Gas abgesaugt und ein inertes Füllgas, beispielsweise Argongas in den Zwischenraum gepumpt. Während dem Pumpen/Spülen-Prozess wird das zweite Außenkolbenende mit der Entladungsröhre verschmolzen und dadurch die Entladungsröhrenanordnung gasdicht verschlossen. Der zur Erwärmung der Außenkolbenenden notwendige Wärmeeintrag erfolgt jeweils über einen Gasbrenner. Abschließend wird das für den Pumpen/Spülen-Prozess benötigte zweite Außenkolbenende abgetrennt bzw. beschnitten.

Nachteilig bei der vorbeschriebenen Lösung ist zum einen, dass für den Gaswechsel im Zwischenraum ein aufwendiger Pumpen/Spülen-Prozess notwendig ist und andererseits das Beschneiden des zweiten Außenkolbenendes einen zusätzlichen vorrichtungstechnischen Aufwand sowie einen Glasabfall verursacht. Der entstehende Glasabfall führt zu einem erhöhten Materialbedarf und erhöht dadurch die Herstellkosten der Entladungsröhrenanordnung. Des Weiteren ist nachteilig, dass vor dem gasdichten Verschließen des zweiten Außenkolbenendes Verbrennungsgase des Gasbrenners, beispielsweise CO₂ und H₂O in den Zwischenraum gelangen können. Dadurch ist es möglich, dass sich nach dem Verschließen und Erkalten des Außenkolbens H₂O als Kondensat in diesem niederschlägt. Dieser Flüssigkeitseintrag im Außenkolben verursacht Korrosion am Glas der Entladungsröhrenanordnung und verschlechtert die Farbortstabilität sowie das Lichtstromverhalten über die Lebensdauer der Lampe.

Die US 2004/0253897 A1 offenbart ein Verfahren zur Herstellung einer elektrischen Lampe mit Außenkolben, gemäß dem der Zwischenraum zwischen Außenkolben und Entladungsgefäß über ein Pumploch in einer rohrartigen Verlängerung des abgedichteten Entladungsgefäßes mit Gas be füllt wird.

### Darstellung der Erfindung

Der Erfindung liegt die Aufgabe zugrunde, ein Verfahren zur Herstellung einer Entladungsröhrenanordnung zu schaffen, bei denen gegenüber herkömmlichen Lösungen ein vereinfachter Gaswechsel bei verringertem Herstellungsaufwand und definierter Gasfüllung ermöglicht ist.

Diese Aufgabe wird durch ein Verfahren gemäß dem Anspruch 1 gelöst. Besonders vorteilhafte Ausführungen der Erfindung sind in den abhängigen Ansprüchen beschrieben.

Bei dem erfindungsgemäßen Verfahren zur Herstellung einer Entladungsröhrenanordnung für eine Lampe wird in einen Außenkolben eine Entladungsröhre eingesetzt, wobei der Außenkolben mit der Entladungsröhre abgedichtet wird und mit dieser einen Zwischenraum zur Aufnahme einer Gasfüllung begrenzt. Erfindungsgemäß erfolgt das Spülen und anschließende Befüllen des Zwischenraumes über die Entladungsröhre und nicht, wie beim Stand der Technik gemäß der DE 101 57 868 A1, über den Außenkolben. Dadurch verbleiben keine Verbrennungsgase im Zwischenraum, die beim Verschließen bzw. Aufbringen des Außenkolbens auf die Entladungsröhre entstehen. Mit Hilfe des erfindungsgemäßen Verfahrens können etwaige, im Zwischenraum angeordnete Verbrennungsgase, die beim Verschließen des zweiten Außenkolbenendes in den Zwischenraum eingedrungen sind, zuverlässig entfernt werden und der Zwischenraum kann mit Hilfe des erfindungsgemäßen Verfahrens mit einer definierten Gasfüllung versehen werden. Gemäß einer besonders bevorzugten Variante des erfindungsgemäßen Verfahrens erfolgt das Spülen des Zwischenraums über ein noch offenes Außenkolbenende. Diese Variante ermöglicht eine komplette Durchspülung des Zwischenraumes, da das Spülgas von einer ersten Seite her über die Entladungsröhre in den Zwischenraum einströmt und auf einer anderen Seite aus dem Außenkolben austritt, so dass gegenüber herkömmlichen Lösungen auf einen aufwendigen Pumpen/Spülen-Prozess verzichtet werden kann. Aufgrund des Durchspülens während des Verschließens des zweiten Außenkolbenendes können weiterhin keine Verbrennungsgase des Gasbrenners in den Zwischenraum gelangen. Dadurch ist der Zwischenraum mit einer definierten Gasfüllung, insbesondere einem inerten Gas, beispielsweise Edelgas oder Stickstoff, befüllbar. Ein Flüssigkeitsniederschlag nach dem Verschließen und Erkalten des Außenkolbens mit den eingangs erläuterten Nachteilen wird verhindert. Die Herstellung der Entladungsröhrenanordnung ist im Vergleich zu dem gattungsgemäßen Verfahren ebenfalls vereinfacht, da die gesonderten Arbeitsschritte zum Abtrennen des zweiten Außenkolbenendes entfallen können. Dadurch wird ein unnötiger Glasabfall und der damit verbundene erhöhte Materialbedarf vermieden.

Die Spülung und Befüllung des Zwischenraumes erfolgt über einen rohrartigen Abschnitt der Entladungsröhre und eine in den rohrartigen Abschnitt mündende Zuführöffnung der Entladungsröhre hindurch. Die Zuführöffnung wird vorzugsweise als Mantelbohrung in die Entladungsröhre eingebracht.

Bei einem erfindungsgemäßen Ausführungsbeispiel wird die Zuführöffnung mittels einem Laserstrahl oder einer sonstigen hochenergetischen Strahlung in die Entladungsröhre eingebracht.

Die Entladungsröhre wird derart in dem Außenkolben angeordnet, dass sich die Zuführöffnung innerhalb des Außenkolbens befindet.

Die Außenkolbenenden werden nach der Erwärmung auf eine Verformungstemperatur mittels eines Werkzeuges verformt und in Anlage an die Entladungsröhre gebracht. Dadurch bildet sich der gasdichte Zwischenraum zur Aufnahme der Gasfüllung aus.

Um während der Erwärmung der Außenkolbenenden einen gleichmäßigen Wärmeeintrag zu ermöglichen, wird vorzugsweise der Außenkolben und/oder die Entladungsröhre gedreht.

Bei einem bevorzugten Ausführungsbeispiel werden die Außenkolbenenden mittels einer Formgebungsrolle auf die Entladungsröhre aufgerollt. Dadurch wird zwischen den Außenkolbenenden und der Entladungsröhre eine gasdichte Verbindung hoher Qualität erreicht.

Gemäß einem besonders bevorzugten Ausführungsbeispiel der Erfindung wird die Zuführöffnung und/oder der rohrartige Abschnitt nach dem Abdichten des zweiten Außenkolbenendes gasdicht verschlossen.

Als besonders vorteilhaft hat es sich erwiesen, wenn der Außenkolben im Bereich der Zuführöffnung auf eine Verformungstemperatur erwärmt und die Zuführöffnung durch Andrücken des Außenkolbens mittels eines Werkzeuges verschlossen wird.

Bei einer erfindungsgemäßen Variante wird der Außenkolben im Bereich der Zuführöffnung auf eine Verformungstemperatur erwärmt und die Entladungsröhre zumindest teilevakuiert. Vorzugsweise gelangt der erwärmte Bereich bei dieser Lösung aufgrund des Druckunterschiedes zwischen dem Druck der Gasfüllung und dem Umgebungsdruck in Anlage mit der Zuführöfnung und verschließt diese gasdicht.

Bei einer alternativen Variante wird die Entladungsröhre auf eine Verformungstemperatur erwärmt und der rohrartige Abschnitt der Entladungsröhre mittels Quetschen und/oder Verschmelzen der Entladungsröhre verschlossen.

Bei einem weiteren Ausführungsbeispiel der Erfindung wird die Zuführöffnung durch hochenergetische Strahlung, vorzugsweise durch Laserstrahlung mit oder ohne Einwirkung der Spülgase verschlossen.

### Kurze Beschreibung der Zeichnungen

Nachstehend wird die Erfindung anhand bevorzugter Ausführungsbeispiele näher erläutert. Es zeigen:
- Figur 1: einen Längsschnitt einer Entladungsröhrenanordnung;
- Figur 2: eine vergrößerte Darstellung des Ausschnittes A aus Figur 1;
- Figur 3: einen ersten Verfahrenschritt zur Ausbildung der Entladungsröhrenanordnung aus Figur 1;
- Figur 4: einen zweiten Verfahrenschritt zur Ausbildung der Entladungsröhrenanordnung aus Figur 1;
- Figur 5: einen dritten Verfahrenschritt zur Herstellung der Entladungsröhrenanordnung aus Figur 1;
- Figur 6: einen weiteren Verfahrenschritt zur Herstellung der Entladungsröhrenanordnung aus Figur 1;
- Figur 7: eine erste Verfahrensvariante zum gasdichten Verschließen der Mantelbohrung durch Anrollen;
- Figur 8: eine zweite Verfahrensvariante zum Verschließen der Mantelbohrung mittels Unterdruck;
- Figur 9: eine dritte Verfahrensvariante zum Verschließen der Entladungsröhre mittels Quetschen
- Figur 10: eine weitere Verfahrensvariante zum Verschließen der Mantelbohrung mittels hochenergetischer Strahlung und

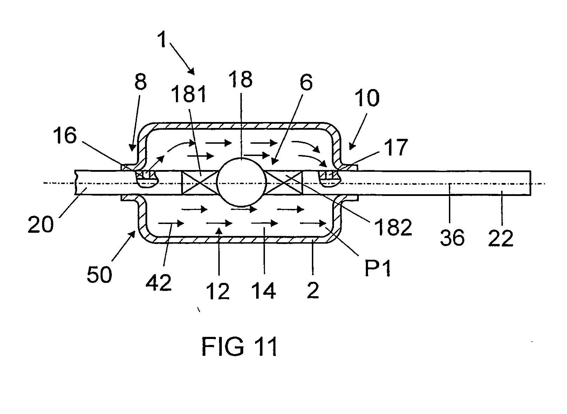

- Figur 11: eine Spülung des Zwischenraums über zwei Mantelbohrungen in der Entladungsbogenröhre.

### Bevorzugte Ausführungen der Erfindung

Die Erfindung wird im Folgenden anhand einer Entladungsröhrenanordnung für eine einseitig gesockelte Entladungslampe, insbesondere für eine Halogen-Metalldampf-Hochdruckentladungslampe für einen Kraftfahrzeugscheinwerfer erläutert. Wie bereits eingangs erwähnt, ist die Anwendung des erfindungsgemäßen Verfahrens jedoch keinesfalls auf derartige Lampentypen beschränkt sondern hier nur beispielhaft gewählt.

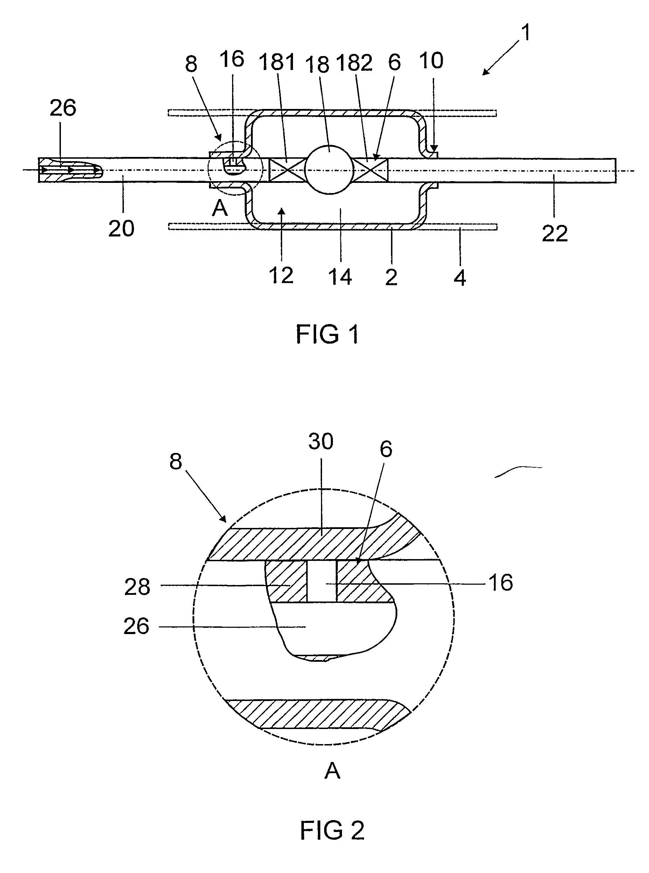

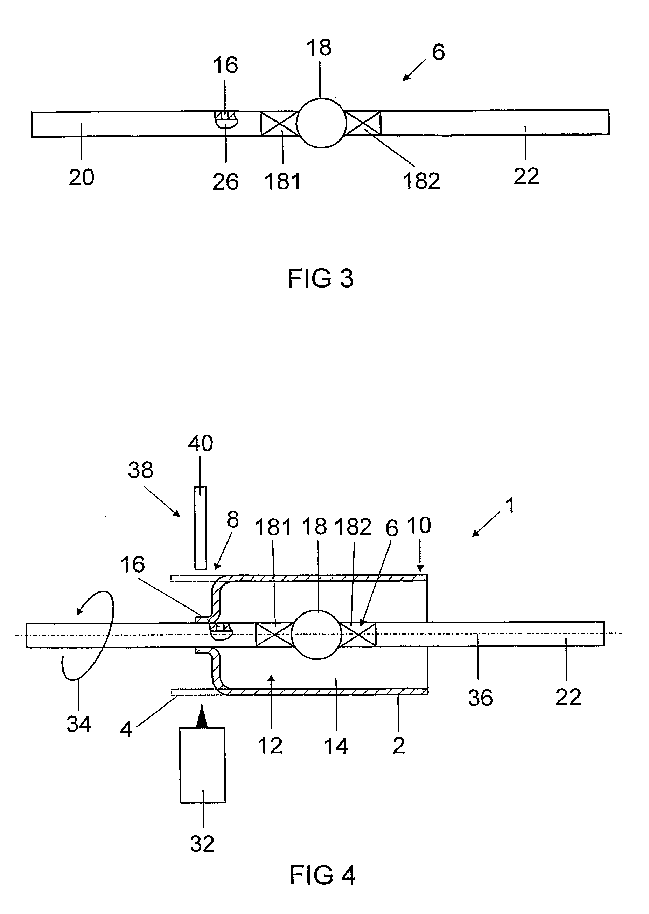

Figur 1 zeigt eine Entladungsröhrenanordnung 1 die beispielsweise in einer einseitig gesockelten Entladungslampe (nicht dargestellt) verwendbar ist. Die Entladungsröhrenanordnung 1 hat einen Außenkolben 2, der im Rohzustand (gestrichelt angedeutet) im Wesentlichen die Form eines Hohlzylinders 4 aufweist. In den Außenkolben 2 ist eine Entladungsröhre 6 eingesetzt und über zwei Außenkolbenenden 8, 10 des Außenkolbens 2 gasdicht mit diesem verbunden. Dadurch begrenzt der Außenkolben 2 mit der Entladungsröhre 6 einen gasdicht verschlossenen Zwischenraum 12 zur Aufnahme einer Gasfüllung 14. Bei dem dargestellten Beispiel findet eine Entladungsröhre 6 Verwendung, die sich gegenüber der herkömmlichen Bauweise lediglich durch eine Zuführöffnung 16 im Bereich des Außenkolbens 2 unterscheidet, deren Funktion in den Figuren 3 bis 10 näher erläutert wird. Eine derartige Entladungsröhre 6 besteht im Wesentlichen aus einem zweiseitig, mittels Quetschdichtungen 181, 182 abgedichteten Lampengefäß 18, in dessen Innenraum eine Xenon und Metallhalogenide enthaltende, ionisierbare Füllung sowie zwei Elektroden zum Erzeugen einer Gasentladung angeordnet sind und dessen Quetschdichtungen 181, 182 an ihren äußeren Enden in rohrartige Halteabschnitte 20, 22 übergehen. Innerhalb der rohrartigen Halteabschnitte 20, 22 verlaufen Stromzuführungen für jeweils eine der oben erwähnten Gasentladungselektroden. Die rohrartigen Halteabschnitte 20, 22 dienen zur Verbindung mit dem Außenkolben 2. Erfindungsgemäß erfolgt eine Spülung des Zwischenraumes 12 über die Entladungsröhre 6, das heißt, über mindestens einen der rohrartigen Halteabschnitte 20, 22 und mindestens eine in den rohrartigen Halteabschnitt 20, 22 mündende Zuführöffnung 16. Die Gaszufuhr zu dem Zwischenraum 12 erfolgt über den Innenraum 26 des rohrartigen Halteabschnitts 20 und die Zuführöffnung 16.

Wie insbesondere Figur 2 zu entnehmen ist, die eine vergrößerte Darstellung des Ausschnittes A aus Figur 1 zeigt, ist die Zuführöffnung 16 als Mantelbohrung in einer Umfangswandung 28 der Entladungsröhre 6 ausgebildet und mündet radial in den Innnraum 26 des rohrartigen Halteabschniutts 20 der Entladungsröhre 6 ein. Die Mantelbohrung 16 wird beispielsweise durch Laserstrahlung in die Umfangswandung 28 der Entladungsröhre 6 eingebracht. Bei dem gezeigten Beispiel ist die Mantelbohrung 16 mit einem Wandungsabschnitt 30 des ersten Außenkolbenendes 8 (in Figur 1 links) verschweißt und dadurch gasdicht verschlossen.

Anhand der Figuren 3 bis 10 wird im Folgenden beispielhaft die Herstellung der Entladungsröhrenanordnung 1 anhand der wesentlichen Verfahrensschritte erläutert.

Gemäß Figur 3, die eine Einzeldarstellung der Entladungsröhre 6 aus Figur 1 zeigt, wird in einem ersten Arbeitsschritt die radial verlaufende Mantelbohrung 16 beispielsweise mittels Laserstrahlung in den Halteabschnitt 20 der Entladungsröhre 6 eingebracht.

Wie Figur 4 zu entnehmen ist, die einen zweiten Verfahrenschritt zur Herstellung der Entladungsröhrenanordnung 1 zeigt, wird die Entladungsröhre 6 dann derart in den Außenkolben 2 eingesetzt, dass sich die Mantelbohrung 16 der Entladungsröhre 6 innerhalb des Außenkolbens 2 befindet. Anschließend wird ein erstes Außenkolbenende 8 auf Verformungstemperatur erwärmt. Die Erwärmung auf Verformungstemperatur erfolgt bei der dargestellten Lösung durch einen schematisch angedeuteten Gasbrenner 32, über den der Bereich des Außenkolbenendens 8 erwärmt wird. Weiterhin ist es möglich, die Erwärmung mittels hochenergetischer Strahlung, beispielsweise durch Laserstrahlung durchzuführen. Um einen gleichmäßigen Wärmeeintrag zu ermöglichen, werden der Außenkolben 2 und die Entladungsröhre 6 während der Erwärmung, wie durch einen Pfeil 34 angedeutet, um eine Längsachse 36 der Entladungsröhrenanordnung 1 gedreht. Nach der Erwärmung des ersten Außenkolbenendes 8 auf eine Verformungstemperatur wird dieses aus dem gestrichelt angedeuteten Rohzustand mittels eines Werkzeuges verformt und dadurch in Anlage an die Entladungsröhre 6 gebracht. Als Werkzeug 38 kann beispielsweise eine schematisch angedeutete Formgebungsrolle 40 eingesetzt werden, über die das erste Außenkolbenende 8 im Bereich des Halteabschnittes 20 auf die Entladungsröhre 6 aufgerollt und mit dieser verschweißt wird. Dadurch wird eine gasdichte Verbindung mit der Entladungsröhre 6 ermöglicht.

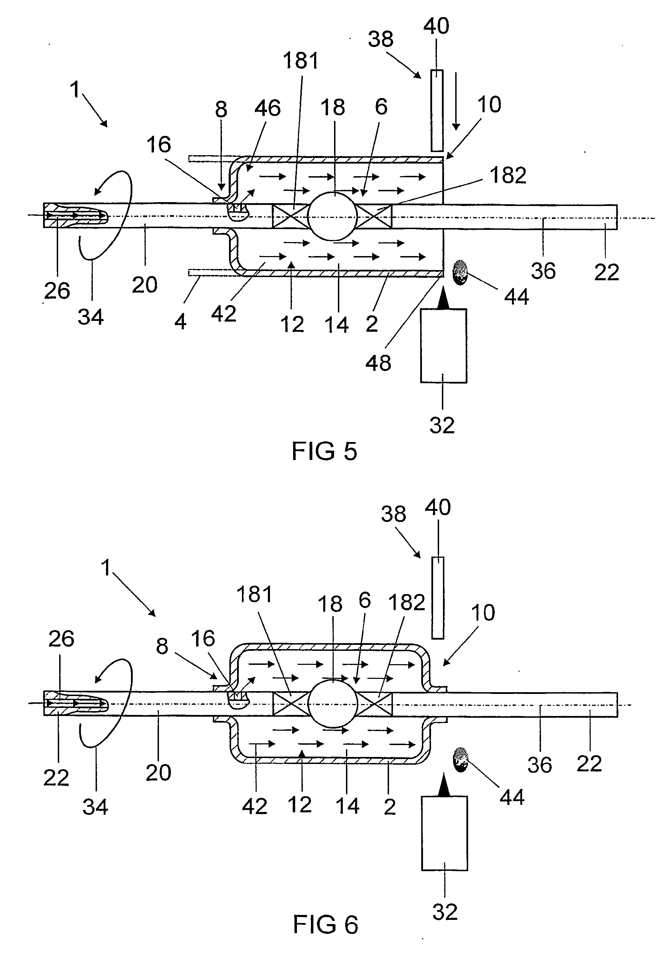

Wie Figur 5 zu entnehmen ist, wird im folgenden Verfahrensschritt das noch offene zweite Außenkolbenende 10 (rechts in Figur 5) mittels des Gasbrenners 32 auf Verformungstemperatur erwärmt. Die Erwärmung und Verschweißung des zweiten Außenkolbenendes 10 mit der Entladungsröhre 6 wird im Wesentlichen wie bereits in Figur 4 erläutert durchgeführt. Erfindungsgemäß erfolgt vor dem Abdichten des zweiten Außenkolbenendes 10 und der anschließenden Gasfüllung eine Spülung des Zwischenraumes 12 über die Entladungsröhre 6. Hierzu wird Spülgas 42 in die Axialbohrung 26 der Entladungsröhre 6 eingeleitet und tritt über die Mantelbohrung 16 in den von Außenkolben 2 und Entladungsröhre 6 begrenzten etwa ringförmigen Zwischenraum 12 ein. Da das Spülgas 42 über die Entladungsröhre 6, d.h. über den rohrartigen Halteabschnitt 20 und die Mantelbohrung 16, in den Zwischenraum 12 einströmt und aufgrund des geöffneten zweiten Außenkolbenendes 10 auf der anderen Seite aus dem Außenkolben 2 wieder austreten kann, wird der Zwischenraum 12 komplett durchspült und ein definierter Gaswechsel durchgeführt, so dass gegenüber herkömmlichen Lösungen auf einen aufwendigen Pumpen/Spülen-Prozess verzichtet werden kann.

Aufgrund des Durchspülens während des Verschließens des zweiten Außenkolbenendes 10 können weiterhin keine schematisch angedeuteten Verbrennungsgase 44 des Gasbrenners 32 in den Zwischenraum 12 gelangen. Dadurch ist dieser mit einer definierten Spülgasfüllung 14 befüllbar. Die Durchspülung wird durch das Einleiten des Spülgases 42 in den Außenkolben 2 in einen von dem offenen zweiten Außenkolbenende 10 abgewandten Zwischenraumabschnitt 46 (in Figur 5 links) weiter verbessert. Als Spülgas 42 findet ein inertes Gas, beispielsweise ein Edelgas, Stickstoff oder dergleichen Verwendung. Aufgrund der Verwendung eines inerten Gases 42 wird ein Flüssigkeitsniederschlag nach dem Verschließen und Erkalten des Außenkolbens - mit den Eingangs erläuterten Nachteilen - und die Oxidation der Molybdän-Stromzuführung (nicht dargestellt), die in dem Innenraum 26 des rohrartigen Halteabschnitts 20 der Entladungsröhre 6 angeordnetist, verhindert. Die Herstellung der Entladungsröhrenanordnung 1 ist gegenüber dem Stand der Technik gemäß der DE 101 57 868 A1 ebenfalls vereinfacht, da die gesonderten Arbeitsschritte zum Abtrennen des zweiten Außenkolbenendes 10 entfallen können, da die Verschweißung aufgrund der Durchspülung an einem Randbereich 48 des Außenkolbenendes 10 erfolgen kann.

Nach der Erwärmung des zweiten Außenkolbenendes 10 auf eine Verformungstemperatur wird dieses gemäß Figur 6 mittels der Formgebungsrolle 40 in Anlage an die Entladungsröhre 6 gebracht, an diese angerollt und dort verschweißt. Dadurch wird das zweite Außenkolbenende 10 gasdicht mit der Entladungsröhre 6 verbunden.

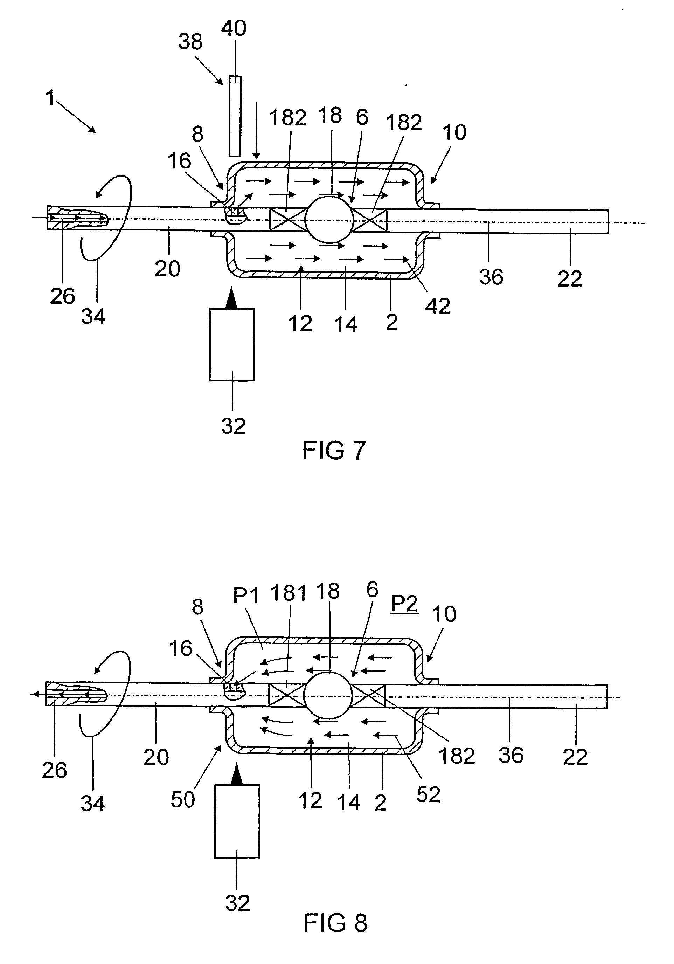

Im folgenden Verfahrenschritt wird der von Entladungsröhre und Außenkolben begrenzte ringförmige Zwischenraum 12 hermetisch abgeschlossen. Hierzu wird die Mantelbohrung 16 oder der rohrartige Halteabschnitt 20 gasdicht verschlossen. Dies wird anhand der Figuren 7 bis 10 näher erläutert.

Gemäß Figur 7, die eine erste Verfahrensvariante zum Verschließen der Mantelbohrung 16 zeigt, wird der Außenkolben 2 im Bereich der Mantelbohrung 16 über den Gasbrenner 32 nochmals auf eine Verformungstemperatur erwärmt und, wie insbesondere Figur 2 zu entnehmen ist, die Mantelbohrung 16 durch Andrücken des Außenkolbens 2 in Pfeilrichtung mittels der Formgebungsrolle 40 verschlossen (sogenanntes Nachrollen). D.h. die Mantelbohrung 16 wird über den Wandungsabschnitt 30 des ersten Außenkolbenendes 8 verschlossen und mit diesem verschweißt. Dadurch wird der mit Spülgas 42 befüllte Zwischenraum 12 gasdicht abgeschlossen.

Alternativ zu dem vorbeschriebenen Verfahrensschritt kann die Mantelbohrung 16 gemäß Figur 8 mittels Unterdruck verschlossen werden. Hierzu wird der Außenkolben 2 in einem Bereich 50 der Mantelbohrung 16 auf eine Verformungstemperatur erwärmt und die Entladungsröhre 6, d.h. der rohrartige Halteabschnitt 20 und die Mantelbohrung 16 zumindest teilevakuiert (in Figur 8 durch Pfeile 52 angedeutet). Aufgrund des Druckunterschiedes zwischen dem Druck der Gasfüllung P1 und dem Umgebungsdruck P2, es gilt P1 < P2, gelangt der erwärmte Bereich 50 des ersten Außenkolbenendes 8 in Anlage mit der Mantelbohrung 16 und verschließt diese gasdicht (siehe Figur 2).

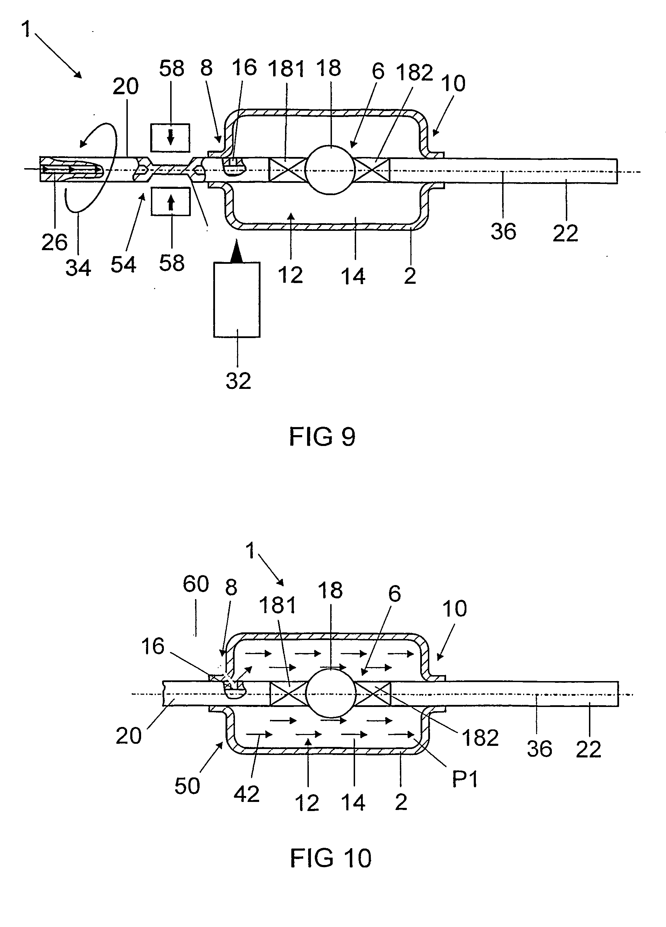

Gemäß Figur 9, die eine weitere Variante eines Verfahrensschrittes zum gasdichten Verschließen des Zwischenraumens 12 zeigt, wird die Entladungsröhre 6 im Bereich des Halteabschnitts 20 in einem von dem ersten Außenkolbenende 8 nicht überdeckten Entladungsröhrenbereich 54 mittels dem Gasbrenner 32 auf eine Verformungstemperatur erwärmt und mittels Quetschen und/oder Verschmelzen verschlossen. Die Quetschung 56 erfolgt über Formquetschbacken 58, so dass der ehemals zylindrische Halteabschnitt 20 der Entladungsröhre 6 zugedrückt wird. Durch das Zusammenquetschen der Entladungsröhre 6 wird der rohrartige Halteabschnitt 20 und damit der Zwischenraum 12 gasdicht verschlossen. Zur Verbesserung der Abdichtung können an der Stromzuführung aus Molybdändraht Formgebungen - beispielsweise eine Abflachung oder Anprägung -vorgenommen werden., Alternativ kann die Abdichtung mittels eines weiteren Molybdänfolie-Glasverbundes wie in den brennernahen Qutschdichtungen 181, 182 durchgeführt werden. Als weitere Alternative kann in diesem Bereich die Abdichtung mittels Glaslot oder mittels Übergangsgläsern realisert werden, die die Differenz der Ausdehnungskoeffizienten von Quarzglas und Metall überbrücken, und somit ein besseres Anglasen und Abdichten ermöglichen.

Figur 10 zeigt eine weitere Verfahrensvariante zum Verschließen der Mantelbohrung 16 der Entladungsröhre 6, gemäß der die Mantelbohrung 16 durch hochenergetische Strahlung verschlossen wird. Hierzu findet in dem gezeigten Ausführungsbeispiel ein Laserstrahl 60 Verwendung, der den Außenkolben 2 von außen durchdringt und auf die Mantelbohrung 16 einwirkt. Die Laserstrahlung führt zu einer Erwärmung im Bereich der Mantelbohrung 16 und dadurch zu einem Verschmelzen ihrer Umfangswandung 28 (siehe Figur 2). Das Verschmelzen kann zusätzlich durch das Ein- bzw. Ausströmen der Spülgase 42 beeinflusst werden.

Nach dem gezielten Abkühlen der Entladungsröhrenanordnung 1 hat die Gasfüllung 14 in dem Zwischenraum 12 beispielsweise einen Druck im Bereich von etwa 50 mbar bis 1500 mbar.

Selbstverständlich kann die Mantelbohrung 16 auch in dem gegenüberliegenden Halteabschnitt 22 (siehe Figur 1) der Entladungsröhre 6 angeordnet sein. Wesentlich ist, dass die Mantelbohrung 16 sich innerhalb des Außenkolbens 2 befindet. Bei dieser Variante wird das zweite Außenkolbenende 10 (rechts in Figur 1) vor dem verschließen des ersten Außenkolbenendes 8 mit der Entladungsröhre 6 verschweißt. Abschließend wird die Mantelbohrung 16 oder die Entladungsröhre 6 gemäß einem der in den Figuren 7 bis 10 erläuterten Verfahrensschritte gasdicht verschlossen.

Alternativ kann der Zwischenraum 12 auch über beide rohrartigen Halteabschnitte 20 und 22 sowie über darin angeordnete Zuführöffnungen 16 und 17 durchgeführt werden. Der Spülgasstrom verläuft in diesem Fall durch den ersten rohrartigen Halteabschnitt 20 und die Zuführöffnung 16 in den Zwischenraum 12 und anschließend über eine weitere Zuführöffnung 17, die innerhalb des Zwischenraums 12 in dem zweiten rohrartigen Halteabschnitt 22 angebracht ist, durch den zweiten rohrartigen Halteabschnitt 22. Das Spülgas strömt damit durch die beiden rohrartigen Halteabschnitte 20, 22 und den Zwischenraum 12, vorbei an dem abgedichteten Lampengefäß 18. Diese Variante hat den Vorteil, dass der Außenkolben 2 vor dem Spülen und dem Befüllen mit Gas auf der Entladungsröhre 6 aufgebracht und verschlossen werden kann und trotzdem eine komplette Spülung des Zwischenraums 12 möglich ist. Das Befüllen des Zwischenraums 12 und Verschließen der Zuführöffnungen 16, 17 erfolgt auf die gleiche Weise wie bei dem anderen Ausführungsbeispiel.

Offenbart ist ein Verfahren zur Herstellung einer Entladungsröhrenanordnung 1 für eine Lampe. Diese hat einen Außenkolben 2 in den eine Entladungsröhre 6 eingesetzt wird, wobei der Außenkolben 2 mit der Entladungsröhre 6 abgedichtet wird und mit dieser einen gasdicht verschlossenen Zwischenraum 12 zur Aufnahme einer Gasfüllung 14 begrenzt. Erfindungsgemäß erfolgt eine Spülung oder / und Befüllung des Zwischenraumes 12 mit Gas über die Entladungsröhre 6.

### Bezugszeichenliste

- 1: Entladungsröhrenanordnung
- 2: Außenkolben
- 4: Hohlzylinder
- 6: Entladungsröhre
- 8: erstes Außenkolbenende
- 10: zweites Außenkolbenende
- 12: Zwischenraum
- 14: Gasfüllung
- 16: Zuführöffnung (Mantelbohrung)
- 17.: Zuführöffnung (Mantelbohrung)
- 18: Lampengefäß
- 181: Quetschdichtung des Lampengefäßes 18
- 182: Quetschdichtung des Lampengefäßes 18
- 20: Halteabschnitt
- 22: Halteabschnitt
- 26: Innenraum des rohrartigen Halteabschnitts 20
- 28: Umfangswandung
- 30: Wandungsabschnitt
- 32: Gasbrenner
- 34: Pfeil
- 36: Längsachse
- 38: Werkzeug
- 40: Formgebungsrolle
- 42: Spülgas
- 44: Verbrennungsgase
- 46: Zwischenraumabschnitt
- 48: Randbereich
- 50: Bereich
- 52: Pfeil

- 54: Entladungsröhrenbereich
- 56: Quetschung
- 58: Formquetschbacken
- 60: Laserstrahl

## Patentansprüche

1. Verfahren zur Herstellung einer Entladungsröhrenanordnung (1) für eine Lampe, mit einem Außenkolben (2) in den eine Entladungsröhre (6) eingesetzt wird, wobei der Außenkolben (2) mit der Entladungsröhre (6) abgedichtet wird und mit dieser einen gasdicht verschlossenen Zwischenraum (12) zur Aufnahme einer Gasfüllung (14) begrenzt, wobei eine Spülung oder bzw. und eine Befüllung des Zwischenraumes (12) mit Gas über mindestens einen rohrartigen Abschnitt (20) der Entladungsröhre (6) und mindestens eine, in den rohrartigen Abschnitt (20) mündende Zuführöffnung (16) hindurch erfolgt,
**dadurch gekennzeichnet, dass**
die Spülung über ein offenes Außenkolbenende (10) oder
über zwei Zuführöffnungen (16, 17) erfolgt, die jeweils in einem rohrartigen Abschnitt (20, 22) der Entladungsröhre (6) angebracht sind und sich innerhalb des Außenkolbens (2) befinden

2. Verfahren nach Anspruch 1, wobei die Zuführöffnung (16) und bzw. oder der rohrartige Abschnitt (20) nach dem Abdichten des offenen Außenkolbenendes (10) gasdicht verschlossen wird.

3. Verfahren nach Anspruch 2, wobei der Außenkolben (2) im Bereich der mindestens einen Zuführöffnung (16) auf eine Verformungstemperatur erwärmt und die mindestens eine Zuführöffnung (16) durch Andrücken des Außenkolbens (2) mittels eines Werkzeuges (38) verschlossen wird.

4. Verfahren nach Anspruch 2, wobei der Außenkolben (2) im Bereich der mindestens einen Zuführöffnung (16) auf eine Verformungstemperatur erwärmt und die Entladungsröhre (6) zumindest teilevakuiert wird.

5. Verfahren nach Anspruch 2, wobei die Entladungsröhre (6) auf eine Verformungstemperatur erwärmt und der rohrartige Abschnitt (20) mittels Quetschen und bzw. oder Verschmelzen der Entladungsröhre (6) verschlossen wird.

## Claims

1. Method for producing a discharge tube arrangement (1) for a lamp, having an outer bulb (2) into which a discharge tube (6) is inserted, the outer bulb (2) being sealed off by the discharge tube (6), and an intermediate space (12), which is sealed in a gas-tight manner, for accommodating a gas filling (14) being delimited by said discharge tube (6), flushing and/or filling of the intermediate space (12) with gas taking place via at least one tubular section (20) of the discharge tube (6) and through at least one supply opening (16), which opens out into the tubular section (20), **characterized in that** flushing takes place via an open outer bulb end (10) or via two supply openings (16, 17), which are each fitted in a tubular section (20, 22) of the discharge tube (6) and are located within the outer bulb (2).

2. Method according to Claim 1, the supply opening (16) and/or the tubular section (20) being sealed in a gas-tight manner once the open outer bulb end (10) has been sealed off.

3. Method according to Claim 2, the outer bulb (2) being heated to a deformation temperature in the region of the at least one supply opening (16), and the at least one supply opening (16) being sealed by the outer bulb (2) being pressed against it by means of a tool (38).

4. Method according to Claim 2, the outer bulb (2) being heated to a deformation temperature in the region of the at least one supply opening (16), and the discharge tube (6) being at least partially evacuated.

5. Method according to Claim 2, the discharge tube (6) being heated to a deformation temperature, and the tubular section (20) being sealed by means of the discharge tube (6) being pinched and/or fused.

## Revendications

1. Procédé de fabrication d'un dispositif ( 1 ) de tube à décharge pour une lampe comprenant une ampoule ( 2 ) extérieure, dans laquelle est mis un tube ( 6 ) de décharge, l'ampoule ( 2 ) extérieure étant rendue étanche avec le tube ( 6 ) de décharge et délimitant avec celui-ci un espace ( 12 ) intermédiaire fermé d'une manière étanche au gaz pour la réception d'une atmosphère ( 14 ) gazeuse, un balayage ou respectivement et un remplissage de l'espace ( 12 ) intermédiaire ( 12 ) s'effectuant par au moins une partie ( 20 ) tubulaire du tube ( 6 ) de décharge et par au moins une ouverture ( 16 ) d'afflux débouchant dans la partie tubulaire,
**caractérisé en ce que**
on effectue le balayage par une extrémité ( 10 ) ouverte de l'ampoule extérieure ou par des ouvertures ( 16, 17 ) d'afflux, qui sont disposées respectivement dans une partie ( 20, 22 ) tubulaire du tube ( 6 ) de décharge et qui se trouve à l'intérieur de l'ampoule ( 2 ) extérieure.

2. Procédé suivant la revendication 1, dans lequel on ferme d'une manière étanche au gaz l'ouverture ( 16 ) d'afflux et/ou respectivement la partie ( 20 ) tubulaire, après avoir rendue étanche l'extrémité ( 10 ) ouverte de l'ampoule extérieure.

3. Procédé suivant la revendication 2, dans lequel on porte à une température de déformation l'ampoule ( 2 ) extérieure dans la partie de la au moins une ouverture ( 16 ) d'afflux et on ferme la au moins une ouverture ( 16 ) d'afflux, en appliquant une pression sur l'ampoule ( 2 ) extérieure au moyen d'un outil ( 38 ).

4. Procédé suivant la revendication 2, dans lequel on porte à une température de déformation l'ampoule ( 2 ) extérieure dans la partie de la au moins une ouverture ( 16 ) d'afflux et on fait le vide au moins en partie dans le tube ( 6 ) de décharge.

5. Procédé suivant la revendication 2, dans lequel on porte à une température de déformation le tube ( 6 ) de décharge et on ferme la partie ( 20 ) tubulaire en pinçant ou en scellant le tube ( 6 ) de décharge.
